(19) Europäisches Patentamt
European Patent Office
Office européen des brevets

(11) EP 4 674 884 A1

(12) EUROPEAN PATENT APPLICATION
published in accordance with Art. 153(4) EPC

(43) Date of publication:
**07.01.2026 Bulletin 2026/02**

(21) Application number: **24763732.5**

(22) Date of filing: **21.02.2024**

(51) International Patent Classification (IPC):
***C08G 59/38*** $^{(2006.01)}$ ***B29C 39/10*** $^{(2006.01)}$
***B29C 39/24*** $^{(2006.01)}$ ***B29C 70/48*** $^{(2006.01)}$
***C08G 59/28*** $^{(2006.01)}$ ***C08G 59/32*** $^{(2006.01)}$
***C08J 5/04*** $^{(2006.01)}$ ***C08J 5/24*** $^{(2006.01)}$

(52) Cooperative Patent Classification (CPC):
**B29C 39/10; B29C 39/24; B29C 70/48; C08G 59/28; C08G 59/32; C08G 59/38; C08J 5/04; C08J 5/24**

(86) International application number:
**PCT/JP2024/006170**

(87) International publication number:
**WO 2024/181251 (06.09.2024 Gazette 2024/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.02.2023 JP 2023029457**
**20.09.2023 JP 2023151915**

(71) Applicant: **Toray Industries, Inc.**
**Tokyo 103-8666 (JP)**

(72) Inventors:
- **HAYASHI, Shinya**
  **Nagoya-shi, Aichi 455-8502 (JP)**
- **WATARI, Ryohei**
  **Nagoya-shi, Aichi 455-8502 (JP)**
- **TOMIOKA, Nobuyuki**
  **Nagoya-shi, Aichi 455-8502 (JP)**

(74) Representative: **Mewburn Ellis LLP**
**Aurora Building**
**Counterslip**
**Bristol BS1 6BX (GB)**

# (54) EPOXY RESIN COMPOSITION FOR RTM, CURED RESIN PRODUCT AND FIBER-REINFORCED COMPOSITE MATERIAL, AND MANUFACTURING METHOD THEREFOR

(57) Challenges are to provide an epoxy resin composition for RTM which achieves both viscosity stability at the time of injection and stiffness at the time of demolding, and a cured resin of which is superior in balance among elastic modulus under wet and heat conditions, heat resistance under wet conditions, and fracture toughness, and to provide a large fiber-reinforced composite material having a high Vf and including the epoxy resin composition. Provided is an epoxy resin composition for RTM including an epoxy resin and a curing agent component, containing the following components [A] and [C] as the epoxy resin, containing the component [B] as the curing agent component, and containing 50 to 85 parts by mass of the component [A] in 100 parts by mass of the epoxy resin,
[A] Tetrafunctional glycidyl amine type epoxy resin
[B] a curing agent that is liquid at 150°C
[C] Aniline type epoxy resin represented by Formula (I):

[Chemical formula 1]

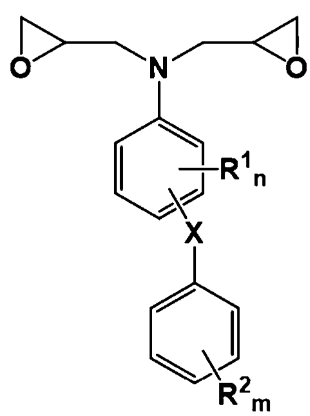

· · · (I)

(In Formula (I), $R^1$ and $R^2$ each represent at least one selected from the group consisting of aliphatic hydrocar-

EP 4 674 884 A1

bon groups having a carbon number of 1 to 4; n is an integer of 0 to 4; and m is an integer of 0 to 5; when n or m is 2 or more, $R^1$ and $R^2$ each may be the same or different at each occurrence; X represents -O- or -S-).

## Description

TECHNICAL FIELD

The present invention relates to an epoxy resin composition for RTM preferably used in aerospace members and general industries, a cured resin, a fiber-reinforced composite material using the cured resin, and a method for producing the fiber-reinforced composite material.

BACKGROUND ART

Epoxy resin compositions are widely used as matrix resins of fiber-reinforced composite materials by taking advantage of the characteristics of being superior in high heat resistance, adhesiveness, and mechanical strength. A fiber-reinforced composite material is produced by combining and integrating a reinforcing fiber and a matrix resin, and examples of the method for producing a fiber-reinforced composite material include a method of laminating and molding a prepreg in which a reinforcing fiber and a matrix resin are impregnated in advance, and a method of injecting a matrix resin having a low viscosity into a shaped reinforcing-fiber base material and curing the resin. In general, a method in which a molding material for fiber-reinforced composite material like a prepreg is used achieves a high mechanical property and therefore has been widely used in the industrial and aircraft fields, but the method has a disadvantage that the production process, which includes preparation and shaping of a prepreg, takes time.

Demand for high productivity is recently increasing in use of structural materials of aircraft, automobiles, and the like, and there is a demand for a technique of producing a large composite material member at high speed and obtaining a fiber-reinforced composite material having a high mechanical property and high heat resistance. Therefore, there is an increasing demand for a fiber-reinforced composite material to which an injection molding method such as resin transfer molding (an RTM method), especially, a molding method in which a loss of time for raising and lowering temperature is eliminated by performing operations from injection to cure at a fixed temperature can be applied and which exhibits superior properties.

In the injection molding method in which operations from injection to molding are performed at a fixed temperature, in order to obtain a large fiber-reinforced composite material, it is necessary that the matrix resin has a low viscosity in the injection step, and, to prevent a molded product from deforming during demolding, the Tg after cure is equal to or more than the mold temperature (hereinafter, sometimes referred to as a mold temperature) during molding. Furthermore, in order to use a fiber-reinforced composite material in a primary structure for aircraft use or the like, the fiber-reinforced composite material is desired to have an elastic modulus and heat resistance both under wet and heat conditions and fracture toughness in a well-balanced manner. Examples of a method of reducing the viscosity of a matrix resin while achieving both the elastic modulus and the heat resistance under wet and heat conditions include a method in which a polyfunctional and low molecular weight epoxy resin is blended in a large amount, but the resulting cured resin has too high a cross-linking density, and thus such a method has a problem of deterioration of the fracture toughness and deterioration of the impact resistance of a fiber-reinforced composite material. In addition, such a method has a problem that the volume fraction of fiber (Vf) of a molded article decreases due to volatilization of a low molecular weight epoxy resin component during the molding step, and thus the mechanical properties are less likely to be exhibited. Therefore, development of a resin design technique has been awaited for obtaining a large fiber-reinforced composite material having a high Vf by injection molding while achieving both the viscosity stability at the time of injection and the stiffness at the time of demolding without impairing the elastic modulus, the heat resistance, and the fracture toughness under wet and heat conditions.

Patent Document 1 discloses a technique to improve stiffness at the time of demolding by use of a tetrafunctional epoxy resin and 4,4'-methylenebis(isopropyl-6-methylaniline) as a curing agent in combination and enhance the fracture toughness of a cured resin by making core-shell rubber particles to be contained.

Patent Document 2 discloses an epoxy resin composition in which N,N-diglycidyl-4-phenoxyaniline having low volatility is blended and which affords a prepreg from which a molded article having few voids is obtained, and also describes a general example in which a resin transfer molding method or the like can be used.

PRIOR ART DOCUMENT

PATENT DOCUMENTS

Patent Document 1: WO 2020/008847 A
Patent Document 2: WO 2010/109929 A

SUMMARY OF THE INVENTION

PROBLEMS TO BE SOLVED BY THE INVENTION

The epoxy resin composition described in Patent Document 1 is superior in stiffness at the time of demolding and fracture toughness, but is not suitable when a higher elastic modulus of a cured resin is required.

The epoxy resin composition described in Patent Document 2 has a high water absorption coefficient, is insufficient in elastic modulus under wet and heat conditions and in glass transition temperature (Tg), has a high viscosity and is poor in impregnating property, and is difficult to be applied to the RTM method.

An object of the present invention is to provide an epoxy resin composition for RTM, a cured resin, and a fiber-reinforced composite material using the cured resin, in which the drawbacks of the prior art are improved.

SOLUTIONS TO THE PROBLEMS

As a result of intensive studies to solve the above problems, the present inventors have found an epoxy resin composition for RTM having the following configurations, and have accomplished the present invention. That is, the epoxy resin composition for RTM of the present invention has the following configurations.

[1] An epoxy resin composition for RTM containing an epoxy resin and a curing agent component, containing the following components [A] and [C] as the epoxy resin, containing the component [B] as the curing agent component, and containing 50 to 85 parts by mass of the component [A] in 100 parts by mass of the epoxy resin,

[A] a tetrafunctional glycidyl amine type epoxy resin
[B] Curing agent that is liquid at 150°C
[C] an aniline type epoxy resin represented by Formula (I):

[Chemical formula 1]

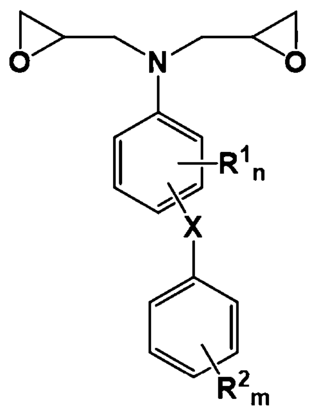

... (I)

Wherein, in Formula (I), $R^1$ and $R^2$ each represent at least one selected from the group consisting of aliphatic hydrocarbon groups having a carbon number of 1 to 4; n is an integer of 0 to 4; and m is an integer of 0 to 5; when n or m is 2 or more, $R^1$ and $R^2$ each may be the same or different at each occurrence; X represents -O- or -S-.

[2] The epoxy resin composition for RTM according to [1], containing tetraglycidyl diaminodiphenylmethane as the component [A].

[3] The epoxy resin composition for RTM according to [1] or [2], containing methylenebisaniline as the component [B].

[4] The epoxy resin composition for RTM according to any one of [1] to [3], containing 4,4'-methylenebis(isopropyl-6-methylaniline) as the component [B].

[5] The epoxy resin composition for RTM according to any one of [1] to [4], wherein the component [B] is contained in an amount of 75 to 100 parts by mass in 100 parts by mass of the curing agent component.

[6] The epoxy resin composition for RTM according to any one of [1] to [5], containing core-shell rubber particles as a component [D] in an amount of 1 to 10 parts by mass based on 100 parts by mass of the epoxy resin.

[7] The epoxy resin composition for RTM according to any one of [1] to [6], wherein a mass reduction rate when heated at 150°C for 30 minutes is 3.0% by mass or less.

[8] The epoxy resin composition for RTM according to any one of [1] to [7], wherein where a viscosity after holding the epoxy resin composition for RTM at a temperature $T_1$ for 30 minutes is denoted by $\eta_{30}$, and a Tg after holding the epoxy

resin composition for RTM at a temperature $T_1$ for 120 minutes is denoted by $Tg_{120}$, a temperature range of $T_1$ that simultaneously satisfies Formulas 1 and 2 is 5°C or more,

$$\eta_{30} \leq 100 \text{ cps} \cdots \text{Formula 1}$$

$$Tg_{120} \geq T_1 \cdots \text{Formula 2.}$$

[9] The epoxy resin composition for RTM according to any one of [8], wherein a maximum temperature satisfying the Formula 1 is 165°C or more.

[10] A cured resin obtained by curing the epoxy resin composition for RTM according to any one of [1] to [9].

[11] A fiber-reinforced composite material including the cured resin according to [10] and a reinforcing-fiber base material.

[12] The fiber-reinforced composite material according to [11], wherein the reinforcing-fiber base material is a carbon fiber base material.

[13] A method for producing a fiber-reinforced composite material, the method including:

injecting the epoxy resin composition for RTM according to any one of [1] to [9] into a reinforcing-fiber base material disposed in a shaping mold heated to 70°C or more and 190°C or less;
impregnating the epoxy resin composition for RTM into the reinforcing-fiber base material; and
curing the epoxy resin composition for RTM in the shaping mold.

[14] The method for producing a fiber-reinforced composite material according to [13], wherein the reinforcing-fiber base material is a carbon fiber base material.

EFFECTS OF THE INVENTION

According to the present invention, an epoxy resin composition for RTM can be provided that can afford a cured resin superior in balance among elastic modulus, heat resistance, and fracture toughness in a wet heat environment. The epoxy resin composition for RTM of the present invention achieves both viscosity stability at the time of injection and stiffness at the time of demolding and has low volatility while maintaining the above-described properties, and therefore can be suitably used as an epoxy resin composition for RTM suitable for production of a large fiber-reinforced composite material having a high Vf by injection molding in which operations from injection to cure are performed at a fixed temperature.

EMBODIMENTS OF THE INVENTION

The epoxy resin composition for RTM of the present invention contains an epoxy resin and a curing agent component, contains component [A]: a tetrafunctional glycidyl amine type epoxy resin and component [C]: an aniline type epoxy resin represented by Formula (I) as the epoxy resin, and contains component [B]: a curing agent that is liquid at 150°C as the curing agent component as an essential component. First, these constituent elements will be described.

(Component [A])

The epoxy resin composition for RTM of the present invention is required to contain the component [A] in an amount of 50 to 85 parts by mass in 100 parts by mass of the epoxy resin. When the component [A] is contained in an amount of 50 to 85 parts by mass in 100 parts by mass of the epoxy resin, the cured epoxy resin exhibits high heat resistance and has a superior elastic modulus under wet and heat conditions. When the component [A] is less than 50 parts by mass, it is impossible to achieve both viscosity stability at the time of injection and stiffness at the time of demolding, and a cured epoxy resin having low heat resistance is obtained. When the component [A] exceeds 85 parts by mass, a cured epoxy resin having a low elastic modulus under wet and heat conditions is obtained. It is preferable that the amount of the component [A] blended is within a range of 60 parts by mass or more and 80 parts by mass or less from the viewpoint of the above effect.

Examples of the component [A] include tetraglycidyl diaminodiphenylmethane and tetraglycidyl diaminodiphenyl sulfone. It is preferable to use tetraglycidyl diaminodiphenylmethane from the viewpoint of improving the balance between viscosity stability at the time of injection and stiffness at the time of demolding.

As the tetraglycidyl diaminodiphenylmethane, "SUMI-EPOXY (registered trademark)" ELM-434, "SUMI-EPOXY (registered trademark)" ELM-434VL (both manufactured by SUMITOMO CHEMICAL COMPANY, LIMITED), YH434L

(manufactured by NIPPON STEEL Chemical & Material CO., LTD.), "jER (registered trademark)" 604 (manufactured by Mitsubishi Chemical Corporation), "Araldite (registered trademark)" MY720, "Araldite (registered trademark)" MY721 (both manufactured by Huntsman Japan KK), and the like can be used.

As the tetraglycidyl diaminodiphenyl sulfone, TG3DAS (manufactured by Konishi Chemical Ind. Co., Ltd.) and the like can be used.

(Component [C])

The epoxy resin composition for RTM of the present invention is required to contain an aniline type epoxy resin represented by Formula (I) as component [C].

[Formula 1]

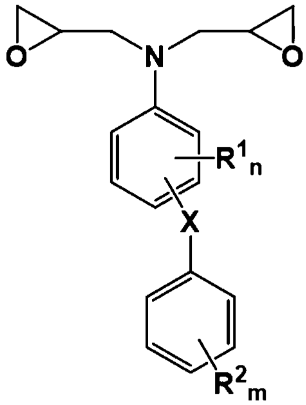

$\cdots$ (I)

(In Formula (I), $R^1$ and $R^2$ each represent at least one selected from the group consisting of aliphatic hydrocarbon groups having a carbon number of 1 to 4; n is an integer of 0 to 4; and m is an integer of 0 to 5; when n or m is 2 or more, $R^1$ and $R^2$ each may be the same or different at each occurrence; X represents -O- or -S-).

When the epoxy resin composition contains the component [C], a cured epoxy resin having a good balance between fracture toughness and elastic modulus under wet and heat conditions is obtained. When the component [C] is not contained, a cured epoxy resin having a low elastic modulus is obtained. Preferably, the component [C] is contained in an amount of 10 to 50 parts by mass, more preferably 20 to 40 parts by mass in 100 parts by mass of the epoxy resin. When the component [C] is 10 parts by mass or more, a cured epoxy resin having a sufficient elastic modulus under wet and heat conditions can be obtained. When the component [C] is 50 parts by mass or less, both viscosity stability at the time of injection and stiffness at the time of demolding can be achieved.

Examples of the component [C] include diglycidyl-p-phenoxyaniline, diglycidyl-4-(4-methylphenoxy)aniline, diglycidyl-4-(4-tert-butylphenoxy)aniline, and diglycidyl-4-(4-phenoxyphenoxy)aniline. Among them, diglycidyl-p-phenoxyaniline (n = 0, m = 0, X = -O-), which has a small molecular weight, is suitably used in a resin injection step by taking advantage of a property of a low viscosity.

Examples of such diglycidyl-p-phenoxyaniline include "TOREP (registered trademark)" A-204E (manufactured by Toray Fine Chemicals Co., Ltd.).

(Component [D])

The epoxy resin composition for RTM of the present invention preferably contains core-shell rubber particles as component [D] in an amount of 1 to 10 parts by mass, and more preferably 3 to 6 parts by mass based on 100 parts by mass of the epoxy resin. When the epoxy resin composition contains the component [D] in the above range, the fracture toughness can be increased without impairing the elastic modulus of a cured epoxy resin, so that a fiber-reinforced composite material superior in compression property and impact resistance is obtained. When the amount of the component [D] blended is less than 1 part by mass, a cured epoxy resin sufficient in fracture toughness may be not obtained. When the amount of the component [D] blending exceeds 10 parts by mass, the viscosity of the epoxy resin composition for RTM increases, and the elastic modulus of a cured epoxy resin may be insufficient.

As the component [D], "Kane Ace (registered trademark)" MX-125", Kane Ace (registered trademark)" MX-150, "Kane Ace (registered trademark)" MX-154, "Kane Ace (registered trademark)" MX-257, "Kane Ace (registered trademark)" MX-267, "Kane Ace (registered trademark)" MX-416, "Kane Ace (registered trademark)" MX-451 (all manufactured by KANEKA CORPORATION), "PARALOID (registered trademark)" EXL-2655, "PARALOID (registered trademark)" EXL-2668 (both manufactured by The Dow Chemical Company), and the like can be used.

(Component [B])

The epoxy resin composition for RTM of the present invention is required to contain a curing agent that is liquid at 150°C as component [B]. A curing agent as used herein is a curing agent suitable for the epoxy resin contained in the epoxy resin composition for RTM according to the present invention, and is a compound having an active group that can react with an epoxy group. Examples of the curing agent that is liquid at 150°C specifically include imidazoles such as 2-methylimidazole and 2-ethyl-4-methylimidazole, acid anhydrides such as phthalic anhydride and maleic anhydride, aliphatic amines such as isophoronediamine and m-xylenediamine, and aromatic amines such as alkylbenzenediamines and methylenebisaniline. Among these, aromatic amines are preferable in that they impart superior mechanical properties to a cured resin. When the epoxy resin composition for RTM contains a curing agent that is liquid at 150°C, the viscosity of the epoxy resin composition for RTM is reduced, and injection and impregnation into a reinforcing-fiber base material in RTM molding are facilitated.

As the component [B], alkylbenzenediamines and methylenebisaniline are preferable, and methylenebisaniline is more preferable.

The alkylbenzenediamines are aromatic amine compounds including a benzene ring having one or more alkyl groups and two amino groups, and a toluenediamine such as diethyltoluenediamine or dimethylthiotoluenediamine is suitably used. When an alkylbenzenediamine is used as a curing agent, a cured epoxy resin having a superior elastic modulus can be obtained while the viscosity of the epoxy resin composition for RTM is suppressed.

Examples of a commercially available product of the alkylbenzenediamine include "jERcure (registered trademark)" WA (manufactured by Mitsubishi Chemical Corporation), "Ethacure (registered trademark)" 100 (manufactured by Albemarle Corporation), "HARTCURE (registered trademark)" 10 (manufactured by KUMIAI CHEMICAL INDUSTRY CO., LTD.), "Lonzacure (registered trademark)" DETDA80 (manufactured by Lonza Ltd.), "Ethacure (registered trademark)" 300 (manufactured by Albemarle Corporation), and "HARTCURE (registered trademark)" 30 (manufactured by KUMIAI CHEMICAL INDUSTRY CO., LTD.).

The methylenebisaniline is an aromatic amine compound in which two aniline compounds are linked by a methylene bridge, and each benzene ring may have various substituents. When a methylenebisaniline is used as a curing agent for an epoxy resin, a cured resin superior in low water absorption and fracture toughness can be obtained.

As the methylenebisaniline, 4,4'-methylenebis(isopropyl-6-methylaniline) (M-MIPA), methylenebis(diethylaniline) (M-DEA), methylenebis(chlorodiethylaniline) (M-CDEA), methylene(methylethylaniline)-(chlorodiethylaniline) (M-MEACDEA), and the like are suitably used. Particularly, use of 4,4'-methylenebis(isopropyl-6-methylaniline) is particularly preferable in that an epoxy resin composition for RTM having a good balance between viscosity stability at the time of injection and stiffness at the time of demolding is obtained, and a cured epoxy resin having a superior balance between elastic modulus and fracture toughness is obtained.

Examples of a commercially available product of the methylenebisaniline include MDA-220 (manufactured by Mitsui Chemicals, Inc.), "Lonzacure (registered trademark)" M-MIPA, "Lonzacure (registered trademark)" M-DEA, "Lonzacure (registered trademark)" M-CDEA, "Lonzacure (registered trademark)" M-DIPA (all manufactured by Lonza Ltd.), and "KAYAHARD (registered trademark)" A-A (PT) (manufactured by Nippon Kayaku Co., Ltd.).

The component [B] is preferably contained in an amount of 75 to 100 parts by mass in 100 parts by mass of the curing agent component. When the component [B] in the above range is contained, an epoxy resin composition for RTM having a good balance between viscosity stability at the time of injection and stiffness at the time of demolding is obtained.

The epoxy resin composition for RTM of the present invention preferably has a mass reduction rate of 3.0% by mass or less, more preferably 1.5% by mass or less, when heating the epoxy resin composition for RTM at 150°C for 30 minutes. Within such a range, volatilization of the resin component in a molding step is suppressed, so that a fiber-reinforced composite material having a high Vf and being superior in mechanical properties is obtained.

The mass reduction rate of the epoxy resin composition for RTM is obtained as follows. About 2 g of the epoxy resin composition for RTM is put into an aluminum cup having an inner diameter of 50 mm, weighed with an electronic balance, then heated in a blower oven set at 150°C for 30 minutes, then taken out and cooled to normal temperature, and then weighed again, and the mass reduction rate of the epoxy resin is calculated.

It is preferable with the epoxy resin composition for RTM of the present invention that the temperature range of $T_1$ that simultaneously satisfies Formulas 1 and 2 is 5°C or more, and more preferably 10°C or more. The Formula 1 is a formula relating to viscosity stability at the time of injection, and when the viscosity $\eta_{30}$ of an epoxy resin composition for RTM after holding the epoxy resin composition at a temperature $T_1$ for 30 minutes is within such a range, injection into a reinforcing-fiber base material during RTM molding is facilitated. The Formula 2 is a formula relating to stiffness at the time of demolding, and when the Tg of an epoxy resin composition for RTM after holding the epoxy resin composition at a

temperature $T_1$ for 120 minutes, namely $Tg_{120}$, is within such a range, the epoxy resin composition has a necessary and sufficient stiffness for not being deformed at the time of demolding. When the temperature range of $T_1$ that simultaneously satisfies Formulas 1 and 2 is 5°C or more, molding superior in productivity in which operations including injection, cure, and demolding are performed at a fixed temperature is enabled.

$$\eta_{30} \leq 100 \text{ cps} \cdots \text{Formula 1}$$

$$Tg_{120} \geq T_1 \cdots \text{Formula 2.}$$

The viscosity $\eta_{30}$ of an epoxy resin composition for RTM after holding the epoxy resin composition at a temperature $T_1$ for 30 minutes is a measurement obtained by measuring the epoxy resin composition for RTM using a dynamic viscoelasticity measurement device (Discovery HR-2, manufactured by TA Instruments) under the conditions of a measurement mode: parallel plate (25 mmφ, gap: 1.0 mm), a temperature of $T_1$, and a shear speed of 100 $s^{-1}$. As the temperature $T_1$ is higher, the reaction of the epoxy resin composition for RTM is more likely to proceed, and the viscosity after 30 minutes is higher. Therefore, if the maximum temperature satisfying Formula 1 is found, it can be considered that Formula 1 is similarly satisfied even at a temperature equal to or less than the maximum temperature.

The Tg of an epoxy resin composition for RTM after holding the epoxy resin composition at a temperature $T_1$ for 120 minutes, namely $Tg_{120}$, is the value of the midpoint of an inflection point that appears when a thermal history of 120 minutes is given at a fixed temperature $T_1$ using a DSC (DSC25, manufactured by TA Instruments) and then measurement is performed under the conditions of a measurement range: 30 to 280°C and a temperature ramp rate: 3°C/min. The Tg of the cured epoxy resin tends to increase as $T_1$ becomes higher. Therefore, if the minimum temperature satisfying Formula 2 is found, it can be considered that the Formula 2 is similarly satisfied even at a temperature equal to or more than the minimum temperature.

Therefore, the temperature range that simultaneously satisfies Formulas 1 and 2 can be calculated from the difference between the maximum temperature that satisfies Formula 1 and the minimum temperature that satisfies Formula 2.

The epoxy resin composition for RTM of the present invention preferably has a maximum temperature satisfying Formula 1 of 165°C or more. By satisfying such conditions, the difference between the injection temperature and the curing temperature is small, and molding with superior productivity, which requires less time for raising temperature, becomes possible.

It is preferable with the epoxy resin composition for RTM of the present invention that a cured product obtained by curing the epoxy resin composition for RTM at 180°C for 2 hours has an elastic modulus under wet and heat conditions of 3.1 GPa or more, more preferably 3.2 GPa or more. As a result of satisfying the above range, a fiber-reinforced composite material that exhibits higher open hole compression under wet and heat conditions is obtained.

The elastic modulus under wet and heat conditions of such a cured resin is a measurement obtained by immersing a test piece having a thickness of 2.0 mm, a width of 10 mm and a length of 60 mm in boiling water for 48 hours, and performing 3-point bending using an Instron universal testing machine (manufactured by Instron) with a span of 32 mm at a crosshead speed of 10 mm/min in accordance with JIS K 7171 (1994) under a high temperature environment (82°C).

In the method of measuring the open hole compression under wet and heat conditions of a fiber-reinforced composite material, a rectangular piece having a length of 304.8 mm in the 0° direction and 38.1 mm in the 90° direction was cut out from the fiber-reinforced composite material, and a circular hole having a diameter of 6.35 mm is bored in the piece at the center, whereby a test piece is obtained. This test piece is immersed in hot water at 72°C for 14 days, and then the open hole compression under wet and heat conditions is measured using an Instron universal testing machine (manufactured by Instron) in accordance with ASTM-D6484 under a high temperature environment (82°C). The open hole compression under wet and heat conditions obtained by the above method is preferably 240 MPa or more.

It is preferable with the epoxy resin composition for RTM of the present invention that K1c of a cured product obtained by curing the epoxy resin composition at 180°C for 2 hours is 1.0 $MPa \cdot m^{0.5}$ or more, and more preferably 1.2 $MPa \cdot m^{0.5}$ or more. As a result of satisfying the above range, a fiber-reinforced composite material having few microcracks is obtained.

The K1c of a cured resin is obtained by processing a test piece having a thickness of 6.0 mm into a test piece shape described in ASTM D5045-99, and then subjecting the test piece to an SENB test in accordance with ASTM D5045-99.

Here, a microcrack is a minute crack of about several tens of μm that may be generated in a fiber-reinforced composite material used in aircraft applications, and it is known that microcracks are likely to be generated when a fiber-reinforced composite material is exposed to an environment where a temperature change from a high temperature of about 70°C to a low temperature of about - 50°C is repeated many times. When the matrix resin in the fiber-reinforced composite material is placed under an atmosphere of a high temperature of about 70°C to a low temperature of about

-50°C, the matrix resin itself tends to shrink, but cannot shrink because the matrix resin is surrounded by reinforcing fibers that hardly shrink. As a result, tensile stress (thermal residual stress) is inherent in the matrix resin itself. When this is repeated, environmental fatigue is accumulated, so that microcracks may be generated in the fiber-reinforced composite material. This phenomenon is particularly remarkable in a resin-rich part, and microcracks are also often generated in the resin-rich part. If additional environmental fatigue is applied while microcracks are still generated, the microcracks may further grow into larger cracks, and finally, the large cracks may deteriorate the mechanical properties of the fiber-reinforced composite material.

As a specific method for calculating the number of microcracks, the number of microcracks is obtained by exposing a test piece to environmental conditions as shown in the following procedures a., b., and c. using a commercially available thermo-hygrostat and an environmental testing equipment, then cutting out a portion having a width of 25 mm from a region of ±10 mm from the center of the test piece in the longitudinal direction, polishing the cut-out surface as an observation surface, observing the observation surface at a magnification of 200 times using a commercially available microscope, and counting the number of the cracks generated.

a. A test piece is exposed to an environment of 49°C and 95%/RH for 12 hours using a commercially available thermo-hygrostat.

b. After the exposure, the test piece is transferred to a commercially available environmental testing equipment, and first exposed to an environment of -54°C for 1 hour. Thereafter, the temperature is raised to 71°C at a temperature ramp rate of 10°C ±2°C/min. After the temperature is raised, the test piece is held at 71°C for 5 minutes ±1 minute, then cooled to -54°C at 10°C ± 2°C/minute, and held at -54°C for 5 minutes ±1 minute. The cycle including the increasing the temperature from -54°C to 71°C and the decreasing the temperature to -54°C is defined as 1 cycle, and this cycle is repeated 200 times.

c. The combination of the environmental exposure in the thermo-hygrostat and the cycles in the environmental testing equipment is defined as one block, and 5 blocks are repeated.

The number of microcracks observed by the above method is preferably 10 or less, and more preferably 5 or less from the viewpoint of long-term durability of the fiber-reinforced composite material.

In the present invention, the ratio (Mh/Me) of the number of moles of active hydrogen in 100 parts by mass of the curing agent component (Mh) to the number of moles of active epoxy groups in 100 parts by mass of the epoxy resin (Me) is preferably in the range of 1.0 to 1.4, and more preferably in the range of 1.1 to 1.3. Within such a range, both the elastic modulus under wet and heat conditions and the fracture toughness can be achieved.

The number of moles of active epoxy groups in 100 parts by mass of the epoxy resin (Me) is the sum of the numbers of moles of epoxy resin active groups, and is represented by the following formula.

Me = (mass of epoxy resin A/epoxy equivalent weight of epoxy resin A) + (mass of epoxy resin B/epoxy equivalent weight of epoxy resin B) + ... + (mass of epoxy resin W/epoxy equivalent weight of epoxy resin W)

The number of moles of active hydrogen in 100 parts by mass of the curing agent component (Mh) is the sum of quotients of the masses of the respective curing agents divided by the active hydrogen equivalent weights of the respective curing agents, and is represented by the following formula.

Mh = (mass of curing agent A/active hydrogen equivalent weight of curing agent A) + (mass of curing agent B/active hydrogen equivalent weight of curing agent B) + ... + (mass of curing agent W/active hydrogen equivalent weight of curing agent W).

The epoxy resin composition for RTM of the present invention also has a characteristic such that a cured resin obtained by curing the epoxy resin composition at 180°C for 120 minutes is less likely to decrease in the flexural modulus under wet heating at 82°C ($E_{82}$) than in the flexural modulus at 23°C and 50% RH ($E_{23}$). As an index thereof, the retention rate can be expressed with the ratio of $E_{82}$ to $E_{23}$ ($E_{82}/E_{23}$), and $E_{82}/E_{23}$ is preferably 0.75 or more, and more preferably 0.80 or more.

In the epoxy resin composition for RTM to be used in the present invention, an epoxy resin (component [E]) different from the component [A] or [C] may be used as an epoxy resin as long as an effect of the present invention is not lost.

Examples of such an epoxy resin include bisphenol A type epoxy resins, bisphenol F type epoxy resins, phenol novolac type epoxy resins, triglycidyl aminophenol type epoxy resins, dicyclopentadiene type epoxy resins, biphenyl type epoxy resins, phenolaralkyl type epoxy resins, and naphthalene type epoxy resins. These epoxy resins may be used singly, or in combination of two or more kinds thereof. A dicyclopentadiene type epoxy resin and a naphthalene type epoxy

resin are preferably used from the viewpoint of a superior balance between elastic modulus and fracture toughness. A dicyclopentadiene type epoxy resin is particularly preferably used. In addition to the effect of reducing the water absorption coefficient of the cured epoxy resin, the fracture toughness of the cured resin can be enhanced.

The epoxy resin composition for RTM of the present invention may be prepared by kneading using a machine such as a kneader, a planetary mixer, a triple roll mil, or a twin screw extruder, or by mixing by hand using a beaker and a spatula, or the like as long as uniform kneading is possible.

Since the epoxy resin composition for RTM of the present invention exhibits viscosity stability at a relatively high temperature, is superior in a property of impregnation into a reinforcing-fiber base material, and is easily increased in Tg at a relatively low temperature and is superior in stiffness at the time of demolding, the epoxy resin composition is particularly suitably used in an RTM method in which operations from injection to cure are performed at a fixed temperature. The RTM method is a method in which a reinforcing-fiber base material or a preform is placed in a shaping mold, a liquid matrix resin is injected into the shaping mold, impregnated into the reinforcing fiber, and then cure the matrix resin, and thus a fiber-reinforced composite material as a molded article is obtained. In the method for producing a fiber-reinforced composite material using the epoxy resin composition for RTM of the present invention, the temperature at the time of injecting the matrix resin (the epoxy resin composition for RTM) is not particularly limited, and it is preferable that a reinforcing-fiber base material be disposed in a shaping mold heated to 70°C to 190°C in advance and the epoxy resin composition for RTM of the present invention be injected. Heating the shaping mold in advance reduces the viscosity of the epoxy resin composition for RTM to shorten the injection time, resulting in superior mass productivity. The thermal curing temperature is not required to be the same as the temperature at the time of injection, and the temperature may be appropriately raised to shorten the time required for thermal cure.

In the present invention, as the mold used in the RTM method, a closed mold including a rigid material may be used, and an open mold including a rigid material and a flexible film (bag) may also be used. In the latter case, a reinforcing-fiber base material can be placed between an open mold including a rigid material and a flexible film. As the rigid material, various existing materials are used such as metals such as steel and aluminum, fiber-reinforced plastic (FRP), wood, and gypsum. As the material of the flexible film, polyamides, polyimides, polyesters, fluororesins, silicone resins, and the like are used.

The reinforcing fiber used in the reinforcing-fiber base material used in the fiber-reinforced composite material of the present invention is not particularly limited, and examples of the usable reinforcing fiber include glass fibers, carbon fibers, aramid fibers, boron fibers, alumina fibers, and silicon carbide fibers. Two or more kinds of these fibers may be mixed and used. From the viewpoint of obtaining a lightweight and highly rigid fiber-reinforced composite material, carbon fibers are preferably used.

The fiber-reinforced composite material of the present invention is superior in a mechanical property, compression strength under wet and heat conditions, and impact resistance, and therefore can be preferably used in many structural materials such as aircraft members such as fuselages, main wings, tail wings, moving wings, fairings, cowls, doors, seats, and interior materials, spacecraft members such as motor cases and main wings, artificial satellite members such as body structures and antennas, automobile members such as outer plates, chassis, aerodynamic members, and seats, railway vehicle members such as body structures and seats, and ship members such as hulls and seats.

## EXAMPLES

Hereinafter, the present invention will be described more specifically with reference to Examples, but the present invention is not limited to the description in Examples.

The constituent elements used in Examples are as follows.

<Materials used>

(1) Epoxy resin

- Component [A]: Tetrafunctional glycidyl amine type epoxy resin

  [A]-1 "SUMI-EPOXY (registered trademark)" ELM434VL (tetraglycidyl diaminodiphenylmethane) (manufactured by SUMITOMO CHEMICAL COMPANY, LIMITED)
  [A]-2 "ARALDITE (registered trademark)" MY721 (tetraglycidyl diaminodiphenylmethane) (manufactured by Huntsman Corporation)
  [A]-3 "SUMI-EPOXY (registered trademark)" ELM434 (tetraglycidyl diaminodiphenylmethane) (manufactured by SUMITOMO CHEMICAL COMPANY, LIMITED),

[A]-4 TG3DAS (diaminodiphenyl sulfone type epoxy resin) (manufactured by Konishi Chemical Ind. Co., Ltd.)

· Component [B]: Curing agent that is liquid at 150°C

[B]-1: "jERcure (registered trademark)" WA (diethyltoluenediamine) (manufactured by Mitsubishi Chemical Corporation)
[B]-2: "Ethacure (registered trademark)" 300 (dimethylthiotoluenediamine) (manufactured by Albemarle) (liquid at room temperature)
[B]-3: "Lonzacure (registered trademark)" M-MIPA (4,4'-methylenebis(2-isopropyl-6-methylaniline) (manufactured by Lonza Ltd.) (melting point: 72°C).

· Component [C]: Aniline type epoxy resin represented by Formula (I):
[C]-1 "TOREP (registered trademark)" A-204E (diglycidyl-p-phenoxyaniline) (manufactured by Toray Fine Chemicals Co., Ltd.).
· Component [D]: Core-shell rubber particles
[D]-1 "Kane Ace (registered trademark)" MX-416 (75% by mass of glycidyl amine type epoxy resin and 25% by mass of butadiene-based core-shell rubber particles).
· Component [E]: Another epoxy resin

[E]-1 "EPICLON (registered trademark)" HP-7200L (dicyclopentadiene type epoxy resin) (manufactured by DIC Corporation)
[E]-2 "EPICLON (registered trademark)" HP-7200H (dicyclopentadiene type epoxy resin) (manufactured by DIC Corporation)
[E]-3 "EPICLON (registered trademark)" HP-4770 (naphthalene type epoxy resin) (manufactured by DIC Corporation)
[E]-4 "EPICLON (registered trademark)" 830 (bisphenol F type epoxy resin) (manufactured by DIC Corporation)
[E]-5 "jER (registered trademark)" 630 (triglycidyl-p-aminophenol) (manufactured by Mitsubishi Chemical Corporation)
[E]-6 GAN (diglycidyl aniline) (manufactured by Nippon Kayaku Co., Ltd.).

· Another curing agent component

[G]-1: "SEIKACURE (registered trademark)" S (4,4'-diaminodiphenyl sulfone) (manufactured by SEIKA CORPORATION) (melting point: 170 to 173°C, solid at 150°C).

<Method of Preparing Epoxy Resin Composition for RTM>

Predetermined amounts of components other than a component [B] and another curing agent component were put into a stainless steel beaker, heated to a temperature of 60 to 150°C, and appropriately kneaded until the components were compatible, affording an epoxy main agent liquid. The component [B] and another curing agent component were put into another container, and heated as necessary to be compatible, and thus a curing agent liquid was obtained. Predetermined amounts of the epoxy main agent liquid and the curing agent liquid were mixed and kneaded with a planetary mixer for 3 minutes, affording an epoxy resin composition for RTM. The compositions of the epoxy resin compositions are as shown in Tables 1 to 4.

<Method of Evaluating Mass Reduction Rate of Epoxy Resin Composition for RTM at 150°C>

About 2 g of the epoxy resin composition for RTM obtained in <Method of Preparing Epoxy Resin Composition for RTM> described above was put into an aluminum cup having an inner diameter of 50 mm, weighed with an electronic balance, then heated for 30 minutes in a blower oven (DKM400, manufactured by Yamato Scientific Co., Ltd.) set at 150°C, taken out and cooled to normal temperature, and then weighed again. The mass reduction rate of the resin was calculated from the difference in mass between before and after the heating and subsequent cooling.

<Method of Evaluating $\eta_{30}$ of Epoxy Resin Composition for RTM>

The complex viscosity $\eta_0$ of an epoxy resin composition for RTM obtained in accordance with <Method of Preparing Epoxy Resin Composition for RTM> described above was measured using a dynamic viscoelasticity measurement device (Discovery HR-2, manufactured by TA Instruments) under the conditions of a measurement mode: parallel

plate (25 mmφ, gap: 1.0 mm), a temperature of $T_1$, and a shear speed of 100 $s^{-1}$, and a value after a lapse of 30 minutes was defined as $\eta_{30}$ of the epoxy resin composition for RTM.

<Method of Evaluating $Tg_{120}$ of Epoxy Resin Composition for RTM>

An epoxy resin composition for RTM obtained in accordance with <Method of Preparing Epoxy Resin Composition for RTM> described above was subjected to a thermal history at a fixed temperature $T_1$ for 120 minutes using a DSC (DSC25, manufactured by TA Instruments), and then measured under the conditions of a measurement range: 30 to 280°C and a temperature ramp rate: 3°C/min, and the midpoint of an inflection point that appeared was adopted as the value of $Tg_{120}$.

<Method of Evaluating Flexural Modulus (23°C, 50% RH): $E_{23}$ of Cured Resin>

The epoxy resin composition for RTM obtained in accordance with <Method of Preparing Epoxy Resin Composition for RTM> described above was defoamed in vacuum, and then cured at a temperature of 180°C for 2 hours in a mold set to have a thickness of 2 mm with a 2 mm thick "TEFLON (registered trademark)" spacer, and thus a plate-shaped cured resin having a thickness of 2 mm was obtained. From the cured resin, a test piece having a width of 10 mm and a length of 60 mm was cut out, 3-point bending was performed using an Instron universal testing machine (manufactured by Instron) with a span of 32 mm at a crosshead speed of 10 mm/min in accordance with JIS K 7171 (1994) under a room temperature environment (23°C, 50% RH), and thus the flexural modulus (23°C, 50% RH) was measured. The number of samples was n = 6, and the average of these samples was adopted as the value of the flexural modulus E23.

<Method of Evaluating Flexural Modulus (under wet heating at 82°C): $E_{82}$ of Cured Resin>

A cured resin was obtained in the same manner as in <Method of Evaluating Flexural Modulus (23°C, 50% RH): $E_{23}$ of Cured Resin> described above, and a test piece having a width of 10 mm and a length of 60 mm was cut out, and then immersed in boiling water for 48 hours. The taken-out test piece was subjected to 3-point bending using an Instron universal testing machine (manufactured by Instron) with a span of 32 mm at a crosshead speed of 10 mm/min in accordance with JIS K7171 (1994) under a high temperature environment (82°C), and thus the flexural modulus (under wet heating at 82°C) was measured. The number of samples was n = 6, and the average of these samples was adopted as the value of the flexural modulus $E_{32}$.

<Method of Evaluating Fracture Toughness Value K1c of Cured Resin>

The epoxy resin composition for RTM obtained in accordance with <Method of Preparing Epoxy Resin Composition for RTM> described above was defoamed in vacuum, and then cured at a temperature of 180°C for 2 hours in a mold set to have a thickness of 6 mm with a 6 mm thick "TEFLON (registered trademark)" spacer, and thus a plate-shaped cured resin having a thickness of 6 mm was obtained. The obtained cured resin was processed into a test piece shape described in ASTM D5045-99, and then subjected to an SENB test in accordance with ASTM D5045-99. The number of samples was n = 10, and the average of the samples was adopted as the K1c value.

<Preparation of Reinforcing-Fiber Base Material with Nonwoven Fabric>

A nonwoven fabric (fiber basis weight: 6 $g/m^2$) including polyamide 12 was attached to one surface of a plain woven fabric (fiber basis weight: 285 $g/m^2$) including a carbon fiber "Torayca (registered trademark)" T700G-12K-31E as a reinforcing fiber. Then, the nonwoven fabric was fused using a far-infrared heater, affording a reinforcing-fiber base material with a nonwoven fabric in which the nonwoven fabric was provided on one surface of the reinforcing-fiber base material.

<Preparation of Fiber-Reinforced Composite Material>

The reinforcing-fiber base material with a nonwoven fabric obtained in accordance with <Preparation of Reinforcing-Fiber Base Material with Nonwoven Fabric> described above was cut out into 400 mm × 400 mm such that fiber directions were 0°/90° and 45°/-45°. The cut-out reinforcing-fiber base material with a nonwoven fabric was laminated in a configuration of [(45°/-45°)/(0°/90°)]4s in a mold. Subsequently, the mold was heated to 110°C, and the epoxy resin composition for RTM obtained in accordance with <Method of Preparing Epoxy Resin Composition for RTM> described above was separately heated to 110°C in advance and injected into the mold. Thereafter, the temperature was raised to 180°C at a rate of 1.5 °C/min, and the epoxy resin composition was cured at 180°C for 2 hours, affording a fiber-reinforced composite material.

<Method of Evaluating Open Hole Compression (under wet heating at 82°C): $OHC_{82}$ of Fiber-Reinforced Composite Material>

From the fiber-reinforced composite material obtained in accordance with <Preparation of Fiber-Reinforced Composite Material> described above, a rectangular piece having a length of 304.8 mm in the 0° direction and 38.1 mm in the 90° direction was cut out, and a circular hole having a diameter of 6.35 mm was bored in the piece at the center, affording a test piece. This test piece was immersed in hot water at 72°C for 14 days, and then the open hole compression (under wet heating at 82°C) was measured using an Instron universal testing machine (manufactured by Instron) in accordance with ASTM-D6484 under a high temperature environment (82°C). The number of samples was n = 5, and the average of the samples was adopted as the value of $OHC_{82}$.

<Method for Evaluating Number of Microcracks in Fiber-Reinforced Composite Material>

A test piece having a width of 75 mm and a length of 50 mm was cut from the fiber-reinforced composite material obtained in accordance with <Preparation of Fiber-Reinforced Composite Material> described above such that the 0° direction and the length direction were the same. The obtained test piece was exposed to the environmental conditions shown in the procedures of a., b., and c. below using a commercially available thermo-hygrostat and an environmental testing equipment.

a. The test piece was exposed to an environment of 49°C and 95%/RH for 12 hours using the commercially available thermo-hygrostat.
b. After the exposure, the test piece was transferred to the commercially available environmental testing equipment, and first exposed to an environment of -54°C for 1 hour. Thereafter, the temperature was raised to 71°C at a temperature ramp rate of 10°C ±2°C/min. After the temperature was raised, the test piece was held at 71°C for 5 minutes ±1 minute, then cooled to -54°C at 10°C ± 2°C/minute, and held at -54°C for 5 minutes ±1 minute. The cycle including the increasing the temperature from -54°C to 71°C and the decreasing the temperature to -54°C was defined as 1 cycle, and this cycle was repeated 200 times.
c. The combination of the environmental exposure in the thermo-hygrostat and the cycles in the environmental testing equipment was defined as one block, and 5 blocks were repeated.

From the test piece subjected to the environmental exposure, a portion having a width of 25 mm was cut out in each of the 0° direction, the 45° direction, and the 90° direction, the cut surfaces were polished as observation surfaces, the observation surfaces were observed at a magnification of 200 times using a commercially available microscope, and the number of cracks generated was counted.

Hereinafter, the method of preparing a sample, the cured resin properties, and the measurement results of the uncured resin properties in each Example will be described.

(Example 1)

An epoxy resin composition for RTM was prepared in accordance with <Method of Preparing Epoxy Resin Composition for RTM> described above using, as an epoxy resin, 70 parts by mass of "SUMI-EPOXY (registered trademark)" ELM-434VL (component [A]), 15 parts by mass of "TOREP (registered trademark)" A-204E (component [C]), 20 parts by mass of "Kane Ace (registered trademark)" MX-416 (components [D] and [A]) and 78.0 parts by mass of Lonzacure (registered trademark)" M-MIPA (component [B]).

The flexural property of this epoxy resin composition for RTM was acquired in accordance with <Method of Evaluating Flexural Modulus (23°C, 50% RH): $E_{23}$ of Cured Resin> and <Method of Evaluating Flexural Modulus (under wet heating at 82°C): $E_{82}$ of Cured Resin> described above. As a result, $E_{23}$ was 4.05 GPa, $E_{82}$ was 3.10 GPa, and $E_{82}/E_{23}$ was 0.77, showing a superior elastic modulus under wet and heat conditions. The fracture toughness value was evaluated in accordance with <Method of Evaluating Fracture Toughness Value of Cured Resin> described above and found to be as superior as 1.24 $MPa \cdot m^{0.5}$.

In addition, the mass reduction rate was evaluated in accordance with <Method of Evaluating Mass Reduction Rate of Epoxy Resin Composition for RTM at 150°C> described above. As a result, the mass reduction rate was 0.8% by mass.

In addition, $\eta_{30}$ was evaluated in accordance with <Method of Evaluating $\eta_{30}$ of Epoxy Resin Composition for RTM> described above. As a result, the maximum temperature of $T_1$ satisfying Formula 1 was 165°C, which was sufficiently high. $Tg_{120}$ was evaluated in accordance with <Method of Evaluating $Tg_{120}$ of Epoxy Resin Composition for

RTM> described above. As a result, the minimum temperature of $T_1$ satisfying Formula 2 was 150°C. The temperature range of $T_1$ satisfying Formulas 1 and 2 simultaneously was as wide as 15°C.

(Examples 2 to 15)

Epoxy resin compositions for RTM and cured resins were prepared in the same manner as in Example 1 except that the resin composition was changed as shown in Tables 1 and 2.

As a result of evaluating the elastic modulus under wet heating and the elastic modulus at room temperature, and the fracture toughness value of the epoxy resin composition for RTM of each Example, good physical properties were obtained at all levels. In addition, the mass reduction rate after 30 minutes at 150°C in each Example was less than 3.0% by mass, and the temperature range of $T_1$ satisfying Formulas 1 and 2 simultaneously was 5°C or more.

(Comparative Example 1)

For the epoxy resin composition for RTM shown in Table 3, an epoxy resin composition for RTM was prepared by the same method as in Example 1 was prepared.

The flexural property of this epoxy resin composition for RTM was acquired in accordance with <Method of Evaluating Flexural Modulus (23°C, 50% RH): $E_{23}$ of Cured Resin> and <Method of Evaluating Flexural Modulus (under wet heating at 82°C): $E_{82}$ of Cured Resin> described above. As a result, $E_{23}$ was as high as 4.13 GPa, but $E_{82}$ was as insufficient as 2.97 GPa, and $E_{82}/E_{23}$ was 0.72. In addition, $\eta_{30}$ was evaluated in accordance with <Method of Evaluating $\eta_{30}$ of Epoxy Resin Composition for RTM> described above. As a result, the maximum temperature of $T_1$ satisfying Formula 1 was 160°C, which was slightly insufficient.

(Comparative Example 2)

For the epoxy resin composition for RTM shown in Table 3, an epoxy resin composition for RTM was prepared by the same method as in Example 1 was prepared.

This epoxy resin composition for RTM was evaluated for $\eta_{30}$ in accordance with <Method of Evaluating $\eta_{30}$ of Epoxy Resin Composition for RTM> described above. As a result, the maximum temperature of $T_1$ satisfying Formula 1 was 175°C, which was sufficiently high. $Tg_{120}$ was evaluated in accordance with <Method of Evaluating $Tg_{120}$ of Epoxy Resin Composition for RTM> described above, but there was no $T_1$ satisfying Formula 2. That is, there was no temperature range of $T_1$ satisfying Formulas 1 and 2 simultaneously.

(Comparative Example 3)

For the epoxy resin composition for RTM shown in Table 3, an epoxy resin composition for RTM was prepared by the same method as in Example 1 was prepared.

The flexural property of this epoxy resin composition for RTM was acquired in accordance with <Method of Evaluating Flexural Modulus (23°C, 50% RH): $E_{23}$ of Cured Resin> and <Method of Evaluating Flexural Modulus (under wet heating at 82°C): $E_{82}$ of Cured Resin> described above. As a result, $E_{23}$ was as high as 3.90 GPa, but $E_{82}$ was as insufficient as 2.87 GPa, and $E_{82}/E_{23}$ was 0.74. The fracture toughness value was evaluated in accordance with <Method of Evaluating Fracture Toughness Value of Cured Resin> described above. As a result, the fracture toughness value was as insufficient as 0.95 $MPa \cdot m^{0.5.}$

In addition, the mass reduction rate was evaluated in accordance with <Method of Evaluating Mass Reduction Rate of Epoxy Resin Composition for RTM at 150°C> described above. As a result, the mass reduction rate was as high as 4.0% by mass. In addition, $\eta_{30}$ was evaluated in accordance with <Method of Evaluating $\eta_{30}$ of Epoxy Resin Composition for RTM> described above. As a result, the maximum temperature of $T_1$ satisfying Formula 1 was 155°C, which was slightly insufficient.

(Comparative Example 4)

For the epoxy resin composition for RTM shown in Table 3, an epoxy resin composition for RTM was prepared by the same method as in Example 1 was prepared.

This epoxy resin composition for RTM was evaluated for the mass reduction rate in accordance with <Method of Evaluating Mass Reduction Rate of Epoxy Resin Composition for RTM at 150°C> described above. As a result, the mass reduction rate was as high as 3.5% by mass. In addition, $\eta_{30}$ was evaluated in accordance with <Method of Evaluating $\eta_{30}$ of Epoxy Resin Composition for RTM> described above. As a result, the maximum temperature of $T_1$ satisfying Formula 1 was 160°C, which was slightly insufficient.

(Comparative Example 5)

For the epoxy resin composition for RTM shown in Table 3, an epoxy resin composition for RTM was prepared by the same method as in Example 1 was prepared.

The flexural property of this epoxy resin composition for RTM was acquired in accordance with <Method of Evaluating Flexural Modulus (under wet heating at 82°C): $E_{82}$ of Cured Resin> described above. As a result, $E_{82}$ was as insufficient as 3.01 GPa. In addition, the mass reduction rate was evaluated in accordance with <Method of Evaluating Mass Reduction Rate of Epoxy Resin Composition for RTM at 150°C> described above. As a result, the mass reduction rate was as high as 7.0% by mass. In addition, $\eta_{30}$ was evaluated in accordance with <Method of Evaluating $\eta_{30}$ of Epoxy Resin Composition for RTM> described above. As a result, the maximum temperature of $T_1$ satisfying Formula 1 was as insufficient as 135°C. $Tg_{120}$ was evaluated in accordance with <Method of Evaluating $Tg_{120}$ of Epoxy Resin Composition for RTM> described above. As a result, the minimum temperature of $T_1$ satisfying Formula 2 was 135°C. The temperature range of $T_1$ satisfying Formulas 1 and 2 simultaneously was as insufficient as 0°C.

(Comparative Example 6)

For the epoxy resin composition for RTM shown in Table 3, an epoxy resin composition for RTM was prepared by the method described in Example 3 of Patent Document 2 (WO 2010/109929 A).

The flexural property of this epoxy resin composition for RTM was acquired in accordance with <Method of Evaluating Flexural Modulus (23°C, 50% RH): $E_{23}$ of Cured Resin> and <Method of Evaluating Flexural Modulus (under wet heating at 82°C): $E_{82}$ of Cured Resin> described above. As a result, $E_{23}$ was as high as 4.20 GPa, but $E_{82}$ was as insufficient as 3.00 GPa, and $E_{82}/E_{23}$ was 0.71. The fracture toughness value was evaluated in accordance with <Method of Evaluating Fracture Toughness Value of Cured Resin> described above. As a result, the fracture toughness value was as remarkably low as 0.60 $MPa \cdot m^{0.5}$

In addition, $\eta_{30}$ was evaluated in accordance with <Method of Evaluating $\eta_{30}$ of Epoxy Resin Composition for RTM> described above. As a result, there was no $T_1$ satisfying Formula 1, and injection stability was in inferiority. In addition, $Tg_{120}$ was evaluated in accordance with <Method of Evaluating $Tg_{120}$ of Epoxy Resin Composition for RTM> described above. As a result, there was no $T_1$ satisfying Formula 2, as well. That is, there was no temperature range of $T_1$ satisfying Formulas 1 and 2 simultaneously.

(Comparative Example 7)

For the epoxy resin composition for RTM shown in Table 3, an epoxy resin composition for RTM was prepared by the method described in Example 10 of Patent Document 1 (WO 2020/008847 A).

The flexural property of this epoxy resin composition for RTM was acquired in accordance with <Method of Evaluating Flexural Modulus (under wet heating at 82°C): $E_{82}$ of Cured Resin> described above. As a result, $E_{82}$ was as low as 2.97 GPa.

In addition, $\eta_{30}$ was evaluated in accordance with <Method of Evaluating $\eta_{30}$ of Epoxy Resin Composition for RTM> described above. As a result, the maximum temperature of $T_1$ satisfying Formula 1 was 160°C, which was slightly insufficient.

The properties of the fiber-reinforced composite material of each Example are as follows.

(Example 1')

For the epoxy resin composition for RTM shown in Table 4, a fiber-reinforced composite material was prepared in accordance with <Preparation of Fiber-Reinforced Composite Material> described above.

For this fiber-reinforced composite material, the open hole compression was acquired in accordance with <Method of Evaluating Open Hole Compression (under wet heating at 82°C): $OHC_{82}$ of Fiber-Reinforced Composite Material> described above. As a result, the $OHC_{82}$ was 241 MPa, and a superior compression property under wet and heat conditions was exhibited. In addition, the number of microcracks was evaluated in accordance with <Method for Evaluating Number of Microcracks in Fiber-Reinforced Composite Material> described above. As a result, the number of microcracks was 4 and a superior anti-microcrack property was exhibited.

(Examples 4', 7', 14', and 15')

Fiber-reinforced composite materials were prepared and evaluated in the same manner as in Example 1 except that the resin composition was changed as shown in Table 4. The $OHC_{82}$ and the number of microcracks of the fiber-reinforced composite material of each Example were evaluated. As a result, a superior compression property under wet

and heat conditions and a superior anti-microcrack property were exhibited at all levels.

(Comparative Example 3')

For the resin composition shown in Table 4, a fiber-reinforced composite material was prepared in accordance with <Preparation of Fiber-Reinforced Composite Material> described above.

For this fiber-reinforced composite material, the open hole compression was acquired in accordance with <Method of Evaluating Open Hole Compression (under wet heating at 82°C): $OHC_{82}$ of Fiber-Reinforced Composite Material> described above. As a result, since the elastic modulus under wet and heat conditions of the epoxy resin composition was low, the $OHC_{82}$ was 224 MPa, and a compression property was insufficient. In addition, the number of microcracks was evaluated in accordance with <Method for Evaluating Number of Microcracks in Fiber-Reinforced Composite Material> described above. As a result, many, namely 12 microcracks were generated due to the low fracture toughness of the epoxy resin composition.

(Comparative Example 6')

For the resin composition shown in Table 4, a fiber-reinforced composite material was produced in accordance with <Preparation of Fiber-Reinforced Composite Material> described above. As a result, the injection was not completed in 30 minutes because the resin viscosity of the epoxy resin composition was high. For this fiber-reinforced composite material, the open hole compression was acquired in accordance with <Method of Evaluating Open Hole Compression (under wet heating at 82°C): $OHC_{82}$ of Fiber-Reinforced Composite Material> described above. As a result, since the elastic modulus under wet and heat conditions of the epoxy resin composition was low, the $OHC_{82}$ was 234 MPa, and a compression property was insufficient. In addition, the number of microcracks was evaluated in accordance with <Method for Evaluating Number of Microcracks in Fiber-Reinforced Composite Material> described above. As a result, many, namely 23 microcracks were generated due to the low fracture toughness of the epoxy resin composition.

[Table 1-1]

| | Raw materials of epoxy resin composition | | Example 1 | Example 2 | Example 3 | Example 4 |
|---|---|---|---|---|---|---|
| Component [A]: Tetrafunctional glycidyl amine type epoxy resin | Tetraglycidyl diaminodiphenylmethane | [A]-1 | 70 | 35 | 10 | 35 |
| | | [A]-2 | | | | |
| | | [A]-3 | | | | |
| | Diaminodiphenyl sulfone type epoxy resin | [A]-4 | | | 50 | |
| Component [C]: Glycidylaniline type epoxy resin represented by Formula (I) | Diglycidyl-p-phenoxyaniline | [C]-1 | 15 | 50 | 25 | 25 |
| Component [E]: Another epoxy resin | resin | [E]-1 | | | | |
| | Dicyclopentadiene type epoxy | [E]-2 | | | | |
| | Naphthalene type epoxy resin | [E]-3 | | | | 25 |
| | Bisphenol F type epoxy resin | [E]-4 | | | | |
| | Triglycidyl-p-aminophenol | [E]-5 | | | | |
| | Glycidylaniline | [E]-6 | | | | |
| Mixture of core-shell rubber particles and epoxy resin | [D]: Core-shell rubber particles | [D]-1 | 5 | 5 | 5 | 5 |
| | Tetrafunctional glycidyl amine type epoxy resin (component [A]) | | 15 | 15 | 15 | 15 |

(continued)

| | Raw materials of epoxy resin composition | | Example 1 | Example 2 | Example 3 | Example 4 |
|---|---|---|---|---|---|---|
| Component [B]: a curing agent that is liquid at 150°C | Diethyltoluenediamine | [B]-1 | | | | |
| | Dimethylthiotoluenediamine | [B]-2 | | | | |
| | 4,4'-Methylenebis(2-isopropyl-6-methylaniline) | [B]-3 | 78.0 | 70.0 | 69.5 | 67.0 |
| Another curing agent | 4,4'-Diaminodiphenyl sulfone | [G]-1 | | | | |
| Total amount of component [A] | | | 85 | 50 | 75 | 50 |
| Total amount of component [B] based on 100 parts by mass of all curing agent components | | | 100 | 100 | 100 | 100 |
| Mh/Me | | | 1.2 | 1.2 | 1.2 | 1.2 |
| Properties of cured resin | Flexural modulus (23°C, 50% RH): $E_{23}$ | GPa | 4.05 | 3.85 | 4.25 | 3.92 |
| | Flexural modulus (under wet heating at 82°C): $E_{82}$ | GPa | 3.10 | 3.28 | 3.40 | 3.25 |
| | $E_{82}/E_{23}$ | - | 0.77 | 0.85 | 0.80 | 0.83 |
| | K1c | $MPa\cdot m^{0.5}$ | 1.24 | 1.27 | 1.15 | 1.20 |
| Properties of uncured resin | Mass reduction rate after 30 minutes at 150°C | % by mass | 0.8 | 0.7 | 0.6 | 0.7 |
| | $\eta_{30}$ < 100 cps ··· maximum temperature satisfying Formula 1 | °C | 165 | 170 | 135 | 155 |
| | $Tg_{120}$ > curing temperature ··· minimum temperature satisfying Formula 2 | °C | 150 | 165 | 130 | 150 |
| | Temperature range simultaneously satisfying Formulas 1 and 2 | °C | 15 | 5 | 5 | 5 |

[Table 1-2]

| | Raw materials of epoxy resin composition | | Example 5 | Example 6 | Example 7 | Example 8 |
|---|---|---|---|---|---|---|
| Component [A]: Tetrafunctional glycidyl amine type epoxy resin | Tetraglycidyl diaminodiphenylmethane | [A]-1 | 35 | 60 | 60 | 60 |
| | | [A]-2 | | | | |
| | | [A]-3 | | | | |
| | Diaminodiphenyl sulfone type epoxy resin | [A]-4 | | | | |
| Component [C]: Glycidylaniline type epoxy resin represented by Formula (I) | Diglycidyl-p-phenoxyaniline | [C]-1 | 25 | 25 | 25 | 25 |

(continued)

| | Raw materials of epoxy resin composition | | Example 5 | Example 6 | Example 7 | Example 8 |
|---|---|---|---|---|---|---|
| Component [E]: Another epoxy resin | Dicyclopentadiene type resin | [E]-1 | | | | |
| | epoxy | [E]-2 | 25 | | | |
| | Naphthalene type epoxy resin | [E]-3 | | | | |
| | Bisphenol F type epoxy resin | [E]-4 | | | | |
| | Triglycidyl-p-aminophenol | [E]-5 | | | | |
| | Glycidylaniline | [E]-6 | | | | |
| Mixture of core-shell rubber particles and epoxy resin | [D]: Core-shell rubber particles | [D]-1 | 5 | 5 | 5 | 5 |
| | Tetrafunctional glycidyl amine type epoxy resin (component [A]) | | 15 | 15 | 15 | 15 |
| Component [B]: a curing agent that is liquid at 150°C | Diethyltoluenediamine | [B]-1 | | 11.3 | | |
| | Dimethylthiotoluenediamine | [B]-2 | | | 11.8 | 22.0 |
| | 4,4'-Methylenebis(2-isopropyl-6-methylaniline) | [B]-3 | 65.0 | 56.5 | 59.0 | 44.0 |
| Another curing agent | 4,4'-Diaminodiphenyl sulfone | [G]-1 | | | | |
| Total amount of component [A] | | | 50 | 75 | 75 | 75 |
| Total amount of component [B] based on 100 parts by mass of all curing agent components | | | 100 | 100 | 100 | 100 |
| Mh/Me | | | 1.2 | 1.2 | 1.2 | 1.2 |
| Properties of cured resin | Flexural modulus (23°C, 50% RH): $E_{23}$ | GPa | 3.81 | 3.90 | 4.00 | 4.05 |
| | Flexural modulus (under wet heating at 82°C): $E_{82}$ | GPa | 3.20 | 3.20 | 3.28 | 3.33 |
| | $E_{82}/E_{23}$ | - | 0.84 | 0.82 | 0.82 | 0.82 |
| | K1c | $MPa \cdot m^{0.5}$ | 1.40 | 1.22 | 1.25 | 1.18 |
| Properties of uncured resin | Mass reduction rate after 30 minutes at 150°C | % by mass | 0.7 | 2.8 | 1.1 | 1.7 |
| | $\eta_{30}$ < 100 cps ⋯ maximum temperature satisfying Formula 1 | °C | 165 | 160 | 170 | 170 |
| | $Tg_{120}$ > curing temperature ⋯ minimum temperature satisfying Formula 2 | °C | 155 | 150 | 155 | 165 |
| | Temperature range simultaneously satisfying Formulas 1 and 2 | °C | 10 | 10 | 15 | 5 |

[Table 2-1]

| | Raw materials of epoxy resin composition | | Example 9 | Example 10 | Example 11 | Example 12 |
|---|---|---|---|---|---|---|
| Component [A]: Tetrafunctional glycidyl amine type epoxy resin | Tetraglycidyl diaminodiphenylmethane | [A]-1 | 39 | 45 | 60 | 69 |
| | | [A]-2 | | | | |
| | | [A]-3 | | | | |
| | Diaminodiphenyl sulfone type epoxy resin | [A]-4 | | | | |
| Component [C]: Glycidylaniline type epoxy resin represented by Formula (1) | Diglycidyl-p-phenoxyaniline | [C]-1 | 25 | 25 | 25 | 25 |
| Component [E]: Another epoxy resin | Dicyclopentadiene type epoxy resin | [E]-1 | | | | |
| | | [E]-2 | | | | |
| | Naphthalene type epoxy resin | [E]-3 | | | | |
| | Bisphenol F type epoxy resin | [E]-4 | | | | |
| | Triglycidyl-p-aminophenol | [E]-5 | | | | |
| | Glycidylaniline | [E]-6 | | | | |
| Mixture of core-shell rubber particles and epoxy resin | [D]: Core-shell rubber particles | [D]-1 | 12 | 10 | 5 | 2 |
| | Tetrafunctional glycidyl amine type epoxy resin (component [A]) | | 36 | 30 | 15 | 6 |
| Component [B]: a curing agent that is liquid at 150°C | Diethyltoluenediamine | [B]-1 | | | | |
| | Dimethylthiotoluenediamine | [B]-2 | | | | |
| | 4,4'-Methylenebis(2-isopropyl-6-methylaniline) | [B]-3 | 78.0 | 78.0 | 78.0 | 78.0 |
| Another curing agent | 4,4'-Diaminodiphenyl sulfone | [G]-1 | | | | |
| Total amount of component [A] | | | 75 | 75 | 75 | 75 |
| Total amount of component [B] based on 100 parts by mass of all curing agent components | | | 100 | 100 | 100 | 100 |
| Mh/Me | | | 1.2 | 1.2 | 1.2 | 1.2 |
| Properties of cured resin | Flexural modulus (23°C, 50% RH): $E_{23}$ | GPa | 3.78 | 3.80 | 3.99 | 4.07 |
| | Flexural modulus (under wet heating at 82°C): $E_{82}$ | GPa | 3.10 | 3.10 | 3.26 | 3.38 |
| | $E_{82}/E_{23}$ | - | 0.82 | 0.82 | 0.82 | 0.83 |
| | K1c | $MPa \cdot m^{0.5}$ | 1.48 | 1.42 | 1.26 | 1.15 |

(continued)

| | Raw materials of epoxy resin composition | | Example 9 | Example 10 | Example 11 | Example 12 |
|---|---|---|---|---|---|---|
| Properties of uncured resin | Mass reduction rate after 30 minutes at 150°C | % by mass | 0.8 | 0.8 | 0.8 | 0.8 |
| | $\eta_{30}$ < 100 cps ··· maximum temperature satisfying Formula 1 | °C | 165 | 165 | 165 | 165 |
| | $Tg_{120}$ > curing temperature ··· minimum temperature satisfying Formula 2 | °C | 150 | 150 | 150 | 150 |
| | Temperature range simultaneously satisfying Formulas 1 and 2 | °C | 15 | 15 | 15 | 15 |

[Table 2-2]

| | Raw materials of epoxy resin composition | | Example 13 | Example 14 | Example 15 |
|---|---|---|---|---|---|
| Component [A]: Tetrafunctional glycidyl amine type epoxy resin | Tetraglycidyl diaminodiphenylmethane | [A]-1 | 75 | 55 | 55 |
| | | [A]-2 | | | |
| | | [A]-3 | | | |
| | Diaminodiphenyl sulfone type epoxy resin | [A]-4 | | | |
| Component [C]: Glycidylaniline type epoxy resin represented by Formula (1) | Diglycidyl-p-phenoxyaniline | [C]-1 | 25 | 30 | 30 |
| Component [E]: Another epoxy resin | Dicyclopentadiene type epoxy resin | [E]-1 | | | |
| | | [E]-2 | | | |
| | Naphthalene type epoxy resin | [E]-3 | | | |
| | Bisphenol F type epoxy resin | [E]-4 | | | |
| | Triglycidyl-p-aminophenol | [E]-5 | | | |
| | Glycidylaniline | [E]-6 | | | |
| Mixture of core-shell rubber particles and epoxy resin | [D]: Core-shell rubber particles | [D]-1 | | 5 | 5 |
| | Tetrafunctional glycidyl amine type epoxy resin (component [A]) | | | 15 | 15 |
| Component [B]: a curing agent that is liquid at 150°C | Diethyltoluenediamine | [B]-1 | | | |
| | Dimethylthiotoluenediamine | [B]-2 | | | |
| | 4,4'-Methylenebis(2-isopropyl-6-methylaniline) | [B]-3 | 78.0 | 62.0 | 81.0 |
| Another curing agent | 4,4'-Diaminodiphenyl sulfone | [G]-1 | | | |
| Total amount of component [A] | | | 75 | 70 | 70 |
| Total amount of component [B] based on 100 parts by mass of all curing agent components | | | 100 | 100 | 100 |

(continued)

| | Raw materials of epoxy resin composition | | Example 13 | Example 14 | Example 15 |
|---|---|---|---|---|---|
| Mh/Me | | | 1.2 | 1.0 | 1.3 |
| Properties of cured resin | Flexural modulus (23°C, 50% RH): $E_{23}$ | GPa | 4.28 | 3.9 | 4.1 |
| | Flexural modulus (under wet heating at 82°C): $E_{82}$ | GPa | 3.45 | 3.27 | 3.28 |
| | $E_{82}/E_{23}$ | - | 0.81 | 0.85 | 0.80 |
| | K1c | $MPa \cdot m^{0.5}$ | 1.05 | 1.20 | 1.28 |
| Properties of uncured resin | Mass reduction rate after 30 minutes at 150°C | % by mass | 0.8 | 0.7 | 0.8 |
| | $\eta_{30}$ < 100 cps ⋯ maximum temperature satisfying Formula 1 | °C | 165 | 165 | 165 |
| | $Tg_{120}$ > curing temperature ⋯ minimum temperature satisfying Formula 2 | °C | 150 | 150 | 150 |
| | Temperature range simultaneously satisfying Formulas 1 and 2 | °C | 15 | 15 | 15 |

[Table 3-1]

| | Raw materials of epoxy resin composition | | Comparative Example 1 | Comparative Example 2 | Comparative Example 3 | Comparative Example 4 |
|---|---|---|---|---|---|---|
| Component [A]: Tetrafunctional glycidyl amine type epoxy resin | Tetraglycidyl diaminodiphenylmethane | [A]-1 | 85 | 25 | | 60 |
| | | [A]-2 | | | | |
| | | [A]-3 | | | | |
| | Diaminodiphenyl sulfone type epoxy resin | [A]-4 | | | | |
| Component [C]: Glycidylaniline type epoxy resin represented by Formula (1) | Diglycidyl-p-phenoxyaniline | [C]-1 | | 60 | 25 | |
| Component [E]: Another epoxy resin | Dicyclopentadiene type epoxy resin | [E]-1 | | | | |
| | | [E]-2 | | | | |
| | Naphthalene type epoxy resin | [E]-3 | | | | |
| | Bisphenol F type epoxy resin | [E]-4 | | | | |
| | Triglycidyl-p-aminophenol | [E]-5 | | | 60 | |
| | Glycidylaniline | [E]-6 | | | | 25 |
| Mixture of core-shell rubber particles and epoxy resin | [D]: Core-shell rubber particles | [D]-1 | 5 | 5 | 5 | 5 |
| | Tetrafunctional glycidyl amine type epoxy resin (component [A]) | | 15 | 15 | 15 | 15 |
| Component [B]: a curing agent that is liquid at 150°C | Diethyltoluenediamine | [B]-1 | | | | |
| | Dimethylthiotoluenediamine | [B]-2 | | | | |
| | 4,4'-Methylenebis(2-isopropyl-6-methylaniline) | [B]-3 | 82.0 | 67.5 | 70.0 | 80.0 |
| Another curing agent | 4,4'-Diaminodiphenyl sulfone | [G]-1 | | | | |
| Total amount of component [A] | | | 100 | 40 | 15 | 75 |
| Blending amount of component [B] based on 100 parts by mass of all curing agent components | | | 100 | 100 | 100 | 100 |
| Mh/Me | | | 1.2 | 1.2 | 1.0 | 1.2 |

(continued)

| | Raw materials of epoxy resin composition | | Comparative Example 1 | Comparative Example 2 | Comparative Example 3 | Comparative Example 4 |
|---|---|---|---|---|---|---|
| Properties of cured resin | Flexural modulus (23°C, 50% RH): $E_{23}$ | GPa | 4.13 | 3.80 | 3.90 | 4.11 |
| | Flexural modulus (under wet heating at 82°C): $E_{82}$ | GPa | 2.97 | 3.26 | 2.87 | 3.33 |
| | $E_{82}/E_{23}$ | | 0.72 | 0.86 | 0.74 | 0.81 |
| | K1c | $MPa \cdot m^{0.5}$ | 1.29 | 1.26 | 0.95 | 1.26 |
| Properties of uncured resin | Mass reduction rate after 30 minutes at 150°C | % by mass | 0.9 | 0.7 | 4.0 | 3.5 |
| | $\eta_{30}$ < 100 cps ··· maximum temperature satisfying Formula 1 | °C | 160 | 175 | 155 | 160 |
| | $Tg_{120}$ > curing temperature ··· minimum temperature satisfying Formula | °C | 145 | None | 150 | 145 |
| | Temperature range simultaneously satisfying Formulas 1 and 2 | °C | 15 | None | 5 | 15 |

[Table 3-2]

| | Raw materials of epoxy resin composition | | Comparative Example 5 | Comparative Example 6 | Comparative Example 7 |
|---|---|---|---|---|---|
| Component [A]: Tetrafunctional glycidyl amine type epoxy resin | Tetraglycidyl diaminodiphenylmethane | [A]-1 | 25 | | |
| | | [A]-2 | | | 65 |
| | | [A]-3 | | 70 | |
| | Diaminodiphenyl sulfone type epoxy resin | [A]-4 | | | |
| Component [C]: Glycidylaniline type epoxy resin represented by Formula (1) | Diglycidyl-p-phenoxyaniline | [C]-1 | | | |
| Component [E]: Another epoxy resin | Dicyclopentadiene type epoxy resin | [E]-1 | 30 | | |
| | | [E]-2 | | | |
| | Naphthalene type epoxy resin | [E]-3 | | | |
| | Bisphenol F type epoxy resin | [E]-4 | | 30 | 20 |
| | Triglycidyl-p-aminophenol | [E]-5 | | | |
| | Glycidylaniline | [E]-6 | 30 | | |
| Mixture of core-shell rubber particles and epoxy resin | [D]: Core-shell rubber particles | | 5 | | 5 |
| | Tetrafunctional glycidyl amine type epoxy resin (component [A]) | [D]-1 | 15 | | 15 |
| Component [B]: a curing agent that is liquid at 150°C | Diethyltoluenediamine | [B]-1 | 16.5 | | |
| | Dimethylthiotoluenediamine | [B]-2 | | | |
| | 4,4'-Methylenebis(2-isopropyl-6-methylaniline) | [B]-3 | 33.0 | | 78.0 |
| Another curing agent | 4,4'-Diaminodiphenyl sulfone | [G]-1 | | 50 | |
| Total amount of component [A] | | | 40 | 70 | 80 |
| Blending amount of component [B] based on 100 parts by mass of all curing agent components | | | 100 | 0 | 100 |
| Mh/Me | | | 1.1 | 1.0 | 1.2 |
| Properties of cured resin | Flexural modulus (23°C, 50% RH): $E_{23}$ | GPa | 3.60 | 4.20 | 3.79 |
| | Flexural modulus (under wet heating at 82°C): $E_{82}$ | GPa | 3.01 | 3.00 | 2.97 |
| | $E_{82}/E_{23}$ | | 0.84 | 0.71 | 0.78 |
| | K1c | $MPa \cdot m^{0.5}$ | 1.21 | 0.60 | 1.30 |

(continued)

| | Raw materials of epoxy resin composition | | Comparative Example 5 | Comparative Example 6 | Comparative Example 7 |
|---|---|---|---|---|---|
| Properties of uncured resin | Mass reduction rate after 30 minutes at 150°C | % by mass | 7.0 | 0.7 | 0.8 |
| | $\eta_{30}$ < 100 cps ··· maximum temperature satisfying Formula 1 | °C | 135 | None | 160 |
| | $Tg_{120}$ > curing temperature ··· minimum temperature satisfying Formula 2 | °C | 135 | None | 145 |
| | Temperature range simultaneously satisfying Formulas 1 and 2 | °C | 0 | None | 15 |

[Table 4-1]

| | Raw materials of epoxy resin composition | | Example 1' | Example 4' | Example 7' | Example 14' |
|---|---|---|---|---|---|---|
| Component [A]: Tetrafunctional glycidyl amine type epoxy resin | Tetraglycidyl diaminodiphenylmethane | [A]-1 | 70 | 35 | 60 | 55 |
| | | | | | | |
| | | [A]-2<br>[A]-3 | | | | |
| | Diaminodiphenyl sulfone type epoxy resin | [A]-4 | | | | |
| Component [C]: Glycidylaniline type epoxy resin represented by Formula (1) | Diglycidyl-p-phenoxyaniline | [C]-1 | 15 | 25 | 25 | 30 |
| Component [E]: Another epoxy resin | Dicyclopentadiene type epoxy resin | [E]-1 | | | | |
| | | [E]-2 | | | | |
| | Naphthalene type epoxy resin | [E]-3 | | 25 | | |
| | Bisphenol F type epoxy resin | [E]-4 | | | | |
| | Triglycidyl-p-aminophenol | [E]-5 | | | | |
| | Glycidylaniline | [E]-6 | | | | |
| Mixture of core-shell rubber particles and epoxy resin | [D]: Core-shell rubber particles | [D]-1 | 5 | 5 | 5 | 5 |
| | Tetrafunctional glycidyl amine type epoxy resin (component [A]) | | 15 | 15 | 15 | 15 |
| Component [B]: a curing agent that is liquid at 150°C | Diethyltoluenediamine | [B]-1 | | | | |
| | Dimethylthiotoluenediamine | [B] -2 | | | 11.8 | |
| | 4,4'-Methylenebis(2-isopropyl-6-methylaniline) | [B]-3 | 78.0 | 67.0 | 59.0 | 62.0 |
| Another curing agent | 4,4'-Diaminodiphenyl sulfone | [G]-1 | | | | |

(continued)

| | Raw materials of epoxy resin composition | | Example 1' | Example 4' | Example 7' | Example 14' |
|---|---|---|---|---|---|---|
| Total amount of component [A] | | | 85 | 50 | 75 | 70 |
| Total amount of component [B] based on 100 parts by mass of all curing agent components | | | 100 | 100 | 100 | 100 |
| Mh/Me | | | 1.2 | 1.2 | 1.2 | 1.0 |
| Properties of fiber-reinforced composite material | OHC (under wet heating at 82°C): $OHC_{82}$ | MPa | 241 | 253 | 255 | 254 |
| | Number of microcracks generated | cracks | 4 | 5 | 4 | 5 |

[Table 4-2]

| | Raw materials of epoxy resin composition | | Example 15' | Comparative Example 3' | Comparative Example 6' |
|---|---|---|---|---|---|
| Component [A]: Tetrafunctional glycidyl amine type epoxy resin | Tetraglycidyl diaminodiphenylmethane | [A]-1 | 55 | | |
| | | [A]-2 | | | |
| | | [A]-3 | | | 70 |
| | Diaminodiphenyl sulfone type epoxy resin | [A]-4 | | | |
| Component [C]: Glycidylaniline type epoxy resin represented by Formula (1) | Diglycidyl-p-phenoxyaniline | [C]-1 | 30 | 25 | |
| Component [E]: Another epoxy resin | Dicyclopentadiene type epoxy resin | [E]-1 | | | |
| | | [E]-2 | | | |
| | Naphthalene type epoxy resin | [E]-3 | | | |
| | Bisphenol F type epoxy resin | [E]-4 | | | 30 |
| | Triglycidyl-p-aminophenol | [E]-5 | | 60 | |
| | Glycidylaniline | [E]-6 | | | |
| Mixture of core-shell rubber particles and epoxy resin | [D]: Core-shell rubber particles | [D]-1 | 5 | 5 | |
| | Tetrafunctional glycidyl amine type epoxy resin (component [A]) | | 15 | 15 | |
| Component [B]: a curing agent that is liquid at 150°C | Diethyltoluenediamine | [B]-1 | | | |
| | Dimethylthiotoluenediamine | [B]-2 | | | |
| | 4,4'-Methylenebis(2-isopropyl-6-methylaniline) | [B]-3 | 81.0 | 70.0 | |
| Another curing agent | 4,4'-Diaminodiphenyl sulfone | [G]-1 | | | 50 |
| Total amount of component [A] | | | 70 | 15 | 70 |
| Total amount of component [B] based on 100 parts by mass of all curing agent components | | | 100 | 100 | 0 |
| Mh/Me | | | 1.3 | 1.0 | 1.0 |

(continued)

| | Raw materials of epoxy resin composition | | Example 15' | Comparative Example 3' | Comparative Example 6' |
|---|---|---|---|---|---|
| Properties of fiber-reinforced composite material | OHC (under wet heating at 82°C): $OHC_{82}$ | MPa | 255 | 224 | 234 |
| | Number of microcracks generated | cracks | 4 | 12 | 23 |

The unit of each component in Tables is parts by mass.

INDUSTRIAL APPLICABILITY

The epoxy resin composition for RTM of the present invention can provide a cured epoxy resin having a low viscosity and low volatility and having a high elastic modulus and high fracture toughness under wet and heat conditions. A fiber-reinforced composite material including the epoxy resin composition is also superior in a compression property and impact resistance under wet and heat conditions, and thus can be suitably used in aerospace members and structural members for general industries.

**Claims**

1. An epoxy resin composition for RTM comprising an epoxy resin and a curing agent component, containing the following components [A] and [C] as the epoxy resin, containing the component [B] as the curing agent component, and containing 50 to 85 parts by mass of the component [A] in 100 parts by mass of the epoxy resin,

   [A] Tetrafunctional glycidyl amine type epoxy resin
   [B] a curing agent that is liquid at 150°C
   [C] Aniline type epoxy resin represented by Formula (I):

   [Chemical formula 1]

   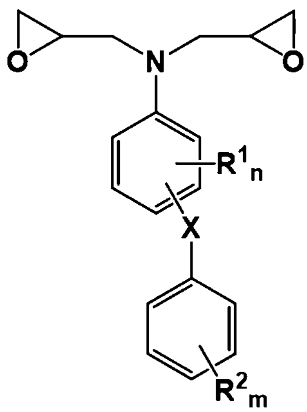

   ···(I)

   (In Formula (I), $R^1$ and $R^2$ each represent at least one selected from the group consisting of aliphatic hydrocarbon groups having a carbon number of 1 to 4; n is an integer of 0 to 4; and m is an integer of 0 to 5; when n or m is 2 or more, $R^1$ and $R^2$ each may be the same or different at each occurrence; X represents -O- or -S-).

2. The epoxy resin composition for RTM according to claim 1, containing tetraglycidyl diaminodiphenylmethane as the component [A].

3. The epoxy resin composition for RTM according to claim 1, containing methylenebisaniline as the component [B] .

4. The epoxy resin composition for RTM according to claim 1, containing 4,4'-methylenebis(isopropyl-6-methylaniline) as the component [B].

5. The epoxy resin composition for RTM according to claim 1, wherein the component [B] is contained in an amount of 75 to 100 parts by mass in 100 parts by mass of the curing agent component.

6. The epoxy resin composition for RTM according to claim 1, containing core-shell rubber particles as a component [D] in an amount of 1 to 10 parts by mass based on 100 parts by mass of the epoxy resin.

7. The epoxy resin composition for RTM according to claim 1, wherein a mass reduction rate when heated at 150°C for 30 minutes is 3.0% by mass or less.

8. The epoxy resin composition for RTM according to claim 1, wherein where a viscosity after holding the epoxy resin composition for RTM at a temperature $T_1$ for 30 minutes is denoted by $\eta_{30}$, and a Tg after holding the epoxy resin composition for RTM at a temperature $T_1$ for 120 minutes is denoted by $Tg_{120}$, a temperature range of $T_1$ that simultaneously satisfies Formulas 1 and 2 is 5°C or more,

$$\eta_{30} \leq 100 \text{ cps} \cdots \text{Formula 1}$$

$$Tg_{120} \geq T_1 \cdots \text{Formula 2.}$$

9. The epoxy resin composition for RTM according to claim 8, wherein a maximum temperature satisfying the Formula 1 is 165°C or more.

10. A cured resin obtained by curing the epoxy resin composition for RTM according to claim 1.

11. A fiber-reinforced composite material comprising the cured resin according to claim 10 and a reinforcing-fiber base material.

12. The fiber-reinforced composite material according to claim 11, wherein the reinforcing-fiber base material is a carbon fiber base material.

13. A method for producing a fiber-reinforced composite material, the method comprising:

injecting the epoxy resin composition for RTM according to claim 1 into a reinforcing-fiber base material disposed in a shaping mold heated to 70°C or more and 190°C or less;
impregnating the epoxy resin composition for RTM into the reinforcing-fiber base material; and
curing the epoxy resin composition for RTM in the shaping mold.

14. The method for producing a fiber-reinforced composite material according to claim 13, wherein the reinforcing-fiber base material is a carbon fiber base material.

## INTERNATIONAL SEARCH REPORT

International application No.
**PCT/JP2024/006170**

### A. CLASSIFICATION OF SUBJECT MATTER

***C08G 59/38***(2006.01)i; ***B29C 39/10***(2006.01)i; ***B29C 39/24***(2006.01)i; ***B29C 70/48***(2006.01)i; ***C08G 59/28***(2006.01)i; ***C08G 59/32***(2006.01)i; ***C08J 5/04***(2006.01)i; ***C08J 5/24***(2006.01)i
FI: C08G59/38; B29C39/10; B29C39/24; B29C70/48; C08G59/28; C08G59/32; C08J5/04; C08J5/24 CFC

According to International Patent Classification (IPC) or to both national classification and IPC

### B. FIELDS SEARCHED

Minimum documentation searched (classification system followed by classification symbols)

C08G59/38; B29C39/10; B29C39/24; B29C70/48; C08G59/28; C08G59/32; C08J5/04; C08J5/24

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2020/008847 A1 (TORAY INDUSTRIES, INC.) 09 January 2020 (2020-01-09) claims 1-12, paragraph [0016], examples 8, 9 | 1-14 |
| Y | WO 2013/099862 A1 (TORAY INDUSTRIES, INC.) 04 July 2013 (2013-07-04) claims 1, 5, paragraph [0013], examples 1-5 | 1-14 |
| Y | JP 2019-526650 A (TORAY INDUSTRIES, INC.) 19 September 2019 (2019-09-19) claim 1, paragraph [0008], example 9 | 1-14 |
| A | WO 2017/110919 A1 (TORAY INDUSTRIES, INC.) 29 June 2017 (2017-06-29) entire text | 1-14 |
| A | WO 2022/163611 A1 (TORAY INDUSTRIES, INC.) 04 August 2022 (2022-08-04) entire text | 1-14 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 March 2024** | **02 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/006170**

| Patent document cited in search report | Publication date (day/month/year) | Patent family member(s) | Publication date (day/month/year) |
|---|---|---|---|
| WO 2020/008847 A1 | 09 January 2020 | US 2021/0261744 A1<br>claims 1-12, paragraph [0023], examples 8, 9<br>EP 3819331 A1<br>CN 112313270 A | |
| WO 2013/099862 A1 | 04 July 2013 | US 2014/0309337 A1<br>claims 1, 5, paragraph [0015], examples 1-5<br>EP 2799460 A1<br>CN 103930461 A<br>KR 10-2014-0109363 A | |
| JP 2019-526650 A | 19 September 2019 | US 2019/0169356 A1<br>claim 1, paragraph [0008], example 9<br>EP 3504257 A1<br>CN 109642019 A<br>KR 10-2019-0046842 A | |
| WO 2017/110919 A1 | 29 June 2017 | US 2021/0198417 A1<br>entire text<br>EP 3395851 A1<br>CN 108431073 A<br>KR 10-2018-0097592 A | |
| WO 2022/163611 A1 | 04 August 2022 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020008847 A
- WO 2010109929 A